# EUROPÄISCHE PATENTSCHRIFT

(11) **EP 3 592 605 B1**
(45) Veröffentlichungstag und Bekanntmachung des Hinweises auf die Patenterteilung: **26.03.2025**
(21) Anmeldenummer: 18708070.0
(22) Anmeldetag: 20.02.2018
(51) Int. Cl.: B60Q 1/50

(54) **KRAFTFAHRZEUG MIT EINEM BELEUCHTUNGSMODUL ZUR GENERIERUNG EINER SYMBOLIK**
MOTOR VEHICLE COMPRISING A LIGHTING MODULE FOR GENERATING A SYMBOL
VÉHICULE AUTOMOBILE COMPRENANT UN MODULE D'ÉCLAIRAGE SERVANT À GÉNÉRER UN SYMBOLE

(30) Priorität: 09.03.2017 DE 102017203893
(43) Veröffentlichungstag der Anmeldung: 15.01.2020
(73) Patentinhaber: Bayerische Motoren Werke Aktiengesellschaft, 80809 München (DE)
(72) Erfinder: HANAFI, Abdelmalek, 80686 München (DE); SOROKIN, Lenja, 80805 München (DE); ERDL, Helmut, 83126 Flintsbach (DE); HAUSMANN, Thomas, 81369 München (DE)
(86) Internationale Anmeldenummer: PCT/EP2018/054129
(87) Internationale Veröffentlichungsnummer: WO 2018/162221

(56) Entgegenhaltungen:
- EP-A1- 0 856 431
- EP-A1- 3 135 537
- EP-A1- 3 216 650
- DE-A1- 102005 013 335
- DE-A1- 102006 050 548
- DE-A1- 102009 009 472
- GB-A- 2 517 790
- JP-A- 2016 088 397
- JP-A- 2016 107 775
- US-A1- 2014 049 384
- ANONYMOUS: "Sicherheitsabstand - Wikipedia", 29 March 2023 (2023-03-29), XP093035792, Retrieved from the Internet <URL:https://de.wikipedia.org/wiki/Sicherheitsabstand> [retrieved on 20230329]

## Beschreibung

Die Erfindung betrifft ein Kraftfahrzeug mit einem Beleuchtungsmodul zur Generierung einer Symbolik.

Aus dem Stand der Technik sind Beleuchtungsmodule für Kraftfahrzeuge bekannt, mit denen Symbole auf dem Boden im Umfeld des Kraftfahrzeugs dargestellt werden. Beispielsweise offenbart die Druckschrift DE 10 2013 211 877 A1 ein Kraftfahrzeug mit einem Projektionsmodul aus einem Array aus Projektionsoptiken. Mit diesem Projektionsmodul wird eine Lichtverteilung in der Form eines Lichtteppichs im Umfeld des Kraftfahrzeugs und insbesondere neben den Einstiegstüren generiert.

Die Druckschrift JP 2016 088 397 A offenbart ein Kraftfahrzeug mit einer Beleuchtungsvorrichtung, die eine Laserlichtquelle und ein Hologramm umfasst. Mit der Beleuchtungsvorrichtung wird eine Warnung auf den Boden zwischen dem Kraftfahrzeug und einem nachfolgenden Fahrzeug projiziert, sofern der Abstand zum nachfolgenden Fahrzeug eine Schwelle unterschreitet und der Lenkwinkeleinschlag des Kraftfahrzeugs größer als ein vorbestimmter Wert ist.

Das Dokument JP 2016 107 775 A offenbart ein Kraftfahrzeug mit einer Beleuchtungsvorrichtung, die eine Laserlichtquelle und ein Diffusionselement umfasst, das als Hologramm ausgestaltet sein kann. Mit der Beleuchtungsvorrichtung wird eine Symbolik vor dem Kraftfahrzeug generiert, wenn der Abstand zwischen dem Kraftfahrzeug und einem vorausfahrenden Fahrzeug kleiner als eine vorbestimmte Distanz ist und die Geschwindigkeitsdifferenz zwischen dem Kraftfahrzeug und dem vorausfahrenden Fahrzeug größer als eine vorbestimmte Differenz ist.

Die Druckschrift DE 10 2009 009 472 A1 offenbart ein Verfahren zum Unterstützen eines Fahrers eines Fahrzeugs, bei dem im Falle, dass ein im Umfeld des Fahrzeugs detektiertes Objekt eine Kollision für das Fahrzeug darstellt, eine Lichtemission erzeugt wird, die dem Fahrer eine Fahrtrichtung zur Verringerung der Kollisionsgefahr weist.

In dem Dokument EP 3 135 537 A1 ist ein Verfahren zum Betrieb einer in einem Kraftfahrzeug angeordneten Laserheckleuchte offenbart, welche eine Lichtverteilung abstrahlt, die ein Lasermuster auf einem vom Kraftfahrzeug befahrenen Untergrund erzeugt. Die Position und/oder Ausdehnung des Lasermusters wird in Abhängigkeit von Fahrsituationsdaten verändert. Unter anderem kann bei der Darstellung des Lasermusters die Entfernung eines hinter dem Kraftfahrzeug fahrenden Verkehrsteilnehmers berücksichtigt werden, wobei diese Entfernung über eine Umfeldsensorikeinrichtung erfasst werden kann.

Aufgabe der Erfindung ist es, ein Kraftfahrzeug mit einem Beleuchtungsmodul zur Generierung einer Symbolik auf dem Boden zu schaffen, wobei mittels des Beleuchtungsmoduls die Verkehrssicherheit verbessert wird.

Diese Aufgabe wird durch das Kraftfahrzeug gemäß Patentanspruch 1 gelöst. Weiterbildungen der Erfindung sind in den abhängigen Ansprüchen definiert.

Das erfindungsgemäße Kraftfahrzeug, bei dem es sich um ein manuell gesteuertes oder auch ein autonom bzw. teilautonom fahrendes Fahrzeug handeln kann, umfasst ein Beleuchtungsmodul zur Generierung einer Symbolik auf dem Boden im Umfeld des Kraftfahrzeugs. Das Beleuchtungsmodul kann beispielsweise als Projektionsmodul ausgestaltet sein, welches die Symbolik auf den Boden im Umfeld des Kraftfahrzeugs projiziert. Das Kraftfahrzeug umfasst ferner eine Umfeldsensorik zur Erfassung von Sensorinformationen in einem Bereich im Umfeld des Kraftfahrzeugs. Je nach Ausgestaltung kann diese Umfeldsensorik eine oder mehrere Kameras und/oder eine oder mehrere Lidareinrichtungen und/oder eine oder mehrere Radareinrichtungen und/oder gegebenenfalls auch andere Arten von Sensoren enthalten.

In dem Kraftfahrzeug ist eine Steuereinrichtung vorgesehen, welche dazu eingerichtet ist, das Beleuchtungsmodul in Abhängigkeit von den Sensorinformationen der Umfeldsensorik derart zu steuern, dass die Symbolik automatisch durch das Beleuchtungsmodul in einem Bodenbereich zwischen dem Kraftfahrzeug und einem anderen Verkehrsteilnehmer generiert wird, sobald gemäß den Sensorinformationen der Abstand zwischen dem Kraftfahrzeug und dem anderen Verkehrsteilnehmer eine vorbestimmte Schwelle unterschreitet. Mit anderen Worten wird aus den Sensorinformationen der Abstand zwischen dem Kraftfahrzeug und dem anderen Verkehrsteilnehmer extrahiert bzw. ausgelesen und diese Information dazu verwendet, bei Unterschreiten einer Abstandsschwelle die Wiedergabe einer Symbolik auszulösen.

Das erfindungsgemäße Beleuchtungsmodul umfasst eine kohärente Lichtquelle, insbesondere eine Laserlichtquelle, mit deren Licht die Symbolik am Boden generiert wird. Vorzugsweise liegt dabei die maximale Leistung der kohärenten Lichtquelle zwischen 50 mW und 3 W. Durch die Verwendung einer Laserlichtquelle kann die Symbolik auch bei großen Abständen zwischen Kraftfahrzeug und anderem Verkehrsteilnehmer angezeigt werden.

Ferner umfasst das erfindungsgemäße Beleuchtungsmodul ein oder mehrere holographisch-optische Elemente, auf welche das Licht der kohärenten Lichtquelle fällt, wobei das oder die holographisch-optischen Elemente für das Licht der kohärenten Lichtquelle im Wesentlichen nicht-absorbierend sind und wobei das oder die holographisch-optischen Elemente dazu eingerichtet sind, zur Generierung der Symbolik eine Interferenz des Lichts der kohärenten Lichtquelle durch dessen Phasenmodulation zu bewirken. Holographisch-optische Elemente sind an sich aus dem Stand der Technik bekannt und können beispielsweise als diffraktive optische Elemente realisiert sein. Sie zeichnen sich dadurch aus, dass die Strukturen zur Ablenkung des Lichts im Bereich von dessen Wellenlänge liegen, so dass Beugungseffekte auftreten. Durch die Verwendung von nichtabsorbierenden holographisch-optischen Elementen wird dabei ein geringer Lichtverlust und somit eine hohe Reichweite gewährleistet, so dass die Symbolik auch in einem großen Abstand vom Kraftfahrzeug wiedergegeben werden kann. Der Begriff "nicht-absorbierend" ist dabei derart zu verstehen, dass das Licht der kohärenten Lichtquelle nach Passieren des oder der holographisch-optischen Elemente eine Intensität von 95 % oder mehr und insbesondere von 99 % oder mehr und besonders bevorzugt von 100 % im Vergleich zur Intensität vor dem Passieren des oder der holographisch-optischen Elemente aufweist. Je nach Ausführungsform können die holographisch-optischen Elemente jeweils reflektierende oder transmissive Elemente sein.

Die Steuereinrichtung des erfindungsgemäßen Kraftfahrzeugs ist ferner derart ausgestaltet, dass sie die Größe der vorbestimmten Schwelle in Abhängigkeit von einem oder mehreren Parametern betreffend das Kraftfahrzeug und/oder die Umgebung des Kraftfahrzeugs festlegt.

Erfindungsgemäß umfassen der oder die Parameter die Haftung des Kraftfahrzeugs auf dem Untergrund, wobei die vorbestimmte Schwelle vorzugsweise umso größer festgelegt wird, je geringer die Haftung ist.

Alternativ oder zusätzlich umfassen der oder die Parameter die Sichtweite in der Umgebung des Kraftfahrzeugs, wobei die vorbestimmte Schwelle vorzugsweise umso größer festgelegt wird, je geringer die Sichtweite wird.

Alternativ oder zusätzlich umfassen der oder die Parameter die Verkehrsdichte in der Umgebung des Kraftfahrzeugs, wobei die vorbestimmte Schwelle vorzugsweise umso größer festgelegt wird, je größer die Verkehrsdichte wird.

Alternativ oder zusätzlich umfassen der oder die Parameter eine aktuell geltende Verkehrsvorschrift auf der Strecke, auf der sich das Kraftfahrzeug befindet, insbesondere eine Verkehrsvorschrift, welche einen Mindestabstand festlegt, wobei in diesem Fall die Schwelle auf den Mindestabstand eingestellt wird.

In einer Ausführungsform umfassen der oder die Parameter zusätzlich die Geschwindigkeit des Kraftfahrzeugs. Vorzugsweise wird dabei die vorbestimmte Schwelle umso größer festgelegt, je größer die Geschwindigkeit des Kraftfahrzeugs ist. Zum Beispiel kann die Schwelle bei einem Geschwindigkeitswert in km/h auf die Hälfte des Werts in Metern eingestellt werden.

In einer weiteren Ausführungsform umfassen der oder die Parameter zusätzlich die Geschwindigkeit des anderen Verkehrsteilnehmers, wobei diese Schwelle vorzugsweise umso größer festgelegt wird, je größer die Geschwindigkeit des anderen Verkehrsteilnehmers ist. Entsprechende Größen, welche die oben genannten Parameter repräsentieren, sind an sich bekannt. Die Parameter können je nach Ausgestaltung auf verschiedene Weise erfasst werden. Insbesondere kann hierfür eine Sensorik im Kraftfahrzeug verwendet werden, oder die Parameter können gegebenenfalls auch über eine Kommunikationsschnittstelle im Kraftfahrzeug, insbesondere eine drahtlose Kommunikationsschnittstelle, empfangen werden. Hierzu kann insbesondere eine Car-to-Car- und/oder eine Car-to-X-Kommunikation genutzt werden.

Die durch das Beleuchtungsmodul generierte Symbolik kann erfindungsgemäß beliebig ausgestaltet sein und unterschiedliche Symbole und insbesondere auch Buchstaben und/oder Zahlen enthalten. Je nach Variante kann die Symbolik gegebenenfalls unterschiedliche Farben bzw. Farbmischungen aufweisen. Insbesondere kann die Symbolik auch weiß sein. Die im erfindungsgemäßen Kraftfahrzeug verwendete Steuereinrichtung kann in einer einzelnen Steuereinheit bzw. in einem einzelnen Steuergerät integriert sein. Gegebenenfalls kann die Steuereinrichtung auch auf mehrere Steuereinheiten bzw. Steuergeräte verteilt sein.

Unter den Begriff des Verkehrsteilnehmers fallen beliebige, am Straßenverkehr teilnehmende Fahrzeuge, wie z.B. andere Kraftfahrzeuge, d.h. PKWs, LKWs, Motorräder und dergleichen, sowie auch ohne Motor angetriebene Fahrzeuge, wie z.B. Fahrräder. Darüber hinaus umfasst der Begriff des Verkehrsteilnehmers auch Fußgänger. Sofern im Folgenden auf die Wahrnehmung bzw. Sichtbarkeit der Symbolik durch den anderen Verkehrsteilnehmer eingegangen wird, ist im Falle eines Fahrzeugs die Wahrnehmung durch eine Person zu verstehen, welche sich im bzw. auf dem Kraftfahrzeug befindet.

Gegebenenfalls kann das erfindungsgemäße Kraftfahrzeug auch mehrere der oben beschriebenen Beleuchtungsmodule mit einer entsprechend zugeordneten Steuereinrichtung umfassen. Das Beleuchtungsmodul ist in einer bevorzugten Variante eine einzelne Einheit, in der gegebenenfalls auch die Steuereinrichtung integriert sein kann. Nichtsdestotrotz kann das Beleuchtungsmodul gegebenenfalls mehrere separate Teilmodule an unterschiedlichen Einbaupositionen am Kraftfahrzeug umfassen.

Das erfindungsgemäße Kraftfahrzeug weist den Vorteil auf, dass andere Verkehrsteilnehmer bzw. gegebenenfalls der Fahrer des Kraftfahrzeugs selbst einfach und intuitiv durch die Generierung einer Symbolik am Boden darauf aufmerksam gemacht werden, dass ein Mindestabstand nicht eingehalten wird. Hierdurch wird die Verkehrssicherheit erhöht.

In einer bevorzugten Variante liegt die vorbestimmte Schwelle, bei deren Unterschreiten die Symbolik generiert wird, bei 200 m oder weniger. Hierdurch wird ein ausreichender Mindestabstand zwischen dem Kraftfahrzeug und dem anderen Verkehrsteilnehmer gewährleistet.

In einer weiteren bevorzugten Ausführungsform ist das Beleuchtungsmodul ein scannendes Beleuchtungsmodul, welches die Symbolik mittels einer Scanbewegung eines Lichtspots auf dem Boden generiert. Diese scannende Beleuchtungsvorrichtung ermöglicht auf einfache Weise eine Variation der generierten Symbolik.

In einer bevorzugten Ausgestaltung des erfindungsgemäßen Kraftfahrzeugs sind das Beleuchtungsmodul und die Umfeldsensorik derart im Kraftfahrzeug verbaut, dass das Beleuchtungsmodul in den hinteren Bereich des Kraftfahrzeugs abstrahlt und die Umfeldsensorik Sensorinformationen im hinteren Bereich des Kraftfahrzeugs erfasst, wobei der hintere Bereich hinter dem Kraftfahrzeug bezogen auf dessen Längsrichtung liegt. Die Symbolik wird dabei vorzugsweise durch monochromatisches Licht und insbesondere rotes Licht generiert. Die Symbolik entspricht somit in der Regel der Farbe der Rückleuchten des Kraftfahrzeugs. In einer bevorzugten Variante wird die Symbolik nur für solche anderen Verkehrsteilnehmer bei Schwellenunterschreitung deren jeweiligen Abstands zum Kraftfahrzeug generiert, welche zumindest teilweise im Raum zwischen den Verlängerungen der beiden Längsseiten des Kraftfahrzeugs nach hinten liegen. Somit werden nur unmittelbar hinter dem Kraftfahrzeug liegende Verkehrsteilnehmer bei der Generierung der Symbolik berücksichtigt.

In einer weiteren bevorzugten Variante des erfindungsgemäßen Kraftfahrzeugs sind das Beleuchtungsmodul und die Umfeldsensorik derart im Kraftfahrzeug verbaut, dass das Beleuchtungsmodul in den vorderen Bereich des Kraftfahrzeugs abstrahlt und die Umfeldsensorik Sensorinformationen im vorderen Bereich des Kraftfahrzeugs erfasst, wobei der vordere Bereich vor dem Kraftfahrzeug bezogen auf dessen Längsrichtung liegt. Vorzugsweise wird die Symbolik dabei nur für solche anderen Verkehrsteilnehmer bei Schwellenunterschreitung deren jeweiligen Abstands zum Kraftfahrzeug generiert, welche zumindest teilweise im Raum zwischen den Verlängerungen der beiden Längsseiten des Kraftfahrzeugs nach vorne liegen. Demzufolge erfolgt die Generierung der Symbolik nur für unmittelbar vor dem erfindungsgemäßen Kraftfahrzeug liegende Verkehrsteilnehmer.

In einer weiteren bevorzugten Variante des erfindungsgemäßen Kraftfahrzeugs ist die Steuereinrichtung zur Steuerung des Beleuchtungsmoduls derart eingerichtet, dass im Falle, dass der Abstand zwischen dem Kraftfahrzeug und dem anderen Verkehrsteilnehmer die vorbestimmte Schwelle unterschreitet, die generierte Symbolik, insbesondere die Farbe und/oder Helligkeit und/oder Position und/oder Form der Symbolik, in Abhängigkeit von der Größe dieses Abstands verändert wird. Die Symbolik wird somit variabel an eine Veränderung dieses Abstands angepasst.

In einer bevorzugten Ausgestaltung wird die Helligkeit der Symbolik am Boden erhöht, je geringer der Abstand zwischen dem Kraftfahrzeug und dem anderen Verkehrsteilnehmer wird, wodurch die Wahrnehmbarkeit der Symbolik durch den anderen Verkehrsteilnehmer bzw. den Fahrer des Kraftfahrzeugs erhöht wird und somit die Verkehrssicherheit weiter verbessert wird.

In einer weiteren bevorzugten Ausführungsform umfasst die am Boden generierte Symbolik eine Mehrzahl von Einzelelementen, wobei sich der Abstand zwischen den Einzelelementen verringert, je geringer der Abstand zwischen dem Kraftfahrzeug und dem anderen Verkehrsteilnehmer wird. Hierdurch wird intuitiv dem Fahrer des Kraftfahrzeugs bzw. dem anderen Verkehrsteilnehmer die Variation des Abstands vermittelt. Vorzugsweise umfassen die Einzelelemente mehrere, in Längsrichtung des Kraftfahrzeugs versetzt zueinander angeordnete Balken. Die Balken sind insbesondere gerade Balken und/oder geknickte Balken in der Form von Pfeilspitzen, wobei die Pfeilspitzen der geknickten Balken vorzugsweise auf das erfindungsgemäße Kraftfahrzeug oder von diesem weg gerichtet sind. Hierdurch wird durch die Symbolik ein Bezug zwischen dem Kraftfahrzeug und dem anderen Verkehrsteilnehmer vermittelt.

In einer weiteren bevorzugten Ausführungsform ist die Steuereinrichtung zur Steuerung des Beleuchtungsmoduls derart eingerichtet, dass im Falle, dass der Abstand zwischen dem Kraftfahrzeug und dem anderen Verkehrsteilnehmer einen Grenzwert kleiner als die vorbestimmte Schwelle unterschreitet, eine Warnmeldung als Symbolik ausgegeben wird. Unter einer Warnmeldung sind dabei ein oder mehrere Symbole (gegebenenfalls auch textuelle Zeichen) zu verstehen, welche unmittelbar durch Personen als ein Hinweis auf eine Gefahr interpretiert werden. Hierdurch wird der Fahrer des Kraftfahrzeugs bzw. der andere Verkehrsteilnehmer nochmals dediziert vor einem Aufprall gewarnt.

In einer weiteren Variante umfasst das erfindungsgemäße Kraftfahrzeug ein für den anderen Verkehrsteilnehmer sichtbares Display, wobei die Steuereinrichtung ferner zur Steuerung des Displays derart eingerichtet ist, dass im Falle, dass der Abstand zwischen dem Kraftfahrzeug und dem anderen Verkehrsteilnehmer eine Grenze kleiner als die vorbestimmte Schwelle unterschreitet, eine Warnmeldung auf dem Display generiert wird. Analog zur obigen Warnmeldung handelt es sich hierbei um ein oder mehrere Symbole, die durch Personen unmittelbar als ein Hinweis auf eine Gefahr interpretiert werden. In dieser Variante der Erfindung erfolgt nochmals eine zusätzliche Warnung über ein separates Display.

In einer weiteren Variante umfasst das erfindungsgemäße Kraftfahrzeug eine Kamera zur Aufnahme des anderen Verkehrsteilnehmers, wobei die Steuereinrichtung ferner zur Steuerung der Kamera derart eingerichtet ist, dass im Falle, dass der Abstand zwischen dem Kraftfahrzeug und dem anderen Verkehrsteilnehmer einen Schwellwert kleiner als die vorbestimmte Schwelle unterschreitet, die Kamera ein Bild des anderen Verkehrsteilnehmers aufnimmt. Auf diese Weise können Verkehrsverstöße geeignet erfasst werden.

Die Werte für den oben beschriebenen Grenzwert, die oben beschriebene Grenze und den oben beschriebenen Schwellwert können gleich groß oder auch unterschiedlich groß festgelegt werden.

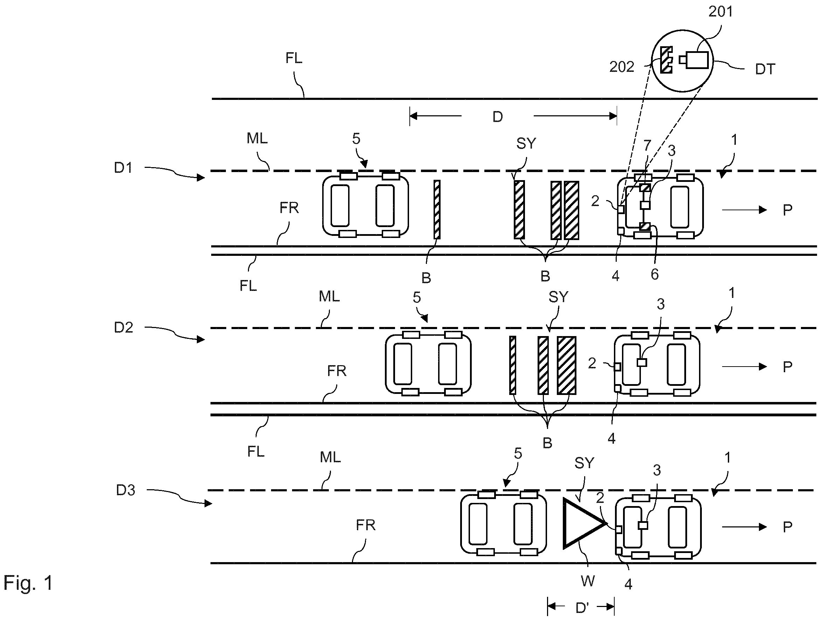

Ein Ausführungsbeispiel der Erfindung wird nachfolgend anhand der beigefügten Fig. 1 detailliert beschrieben. Diese Figur zeigt drei schematische Draufsichten, welche die Generierung einer Symbolik mittels des erfindungsgemäßen Kraftfahrzeugs verdeutlichen.

Fig. 1 zeigt in drei Draufsichten D1, D2 und D3 ein Szenario, bei dem eine Ausführungsform eines erfindungsgemäßen Kraftfahrzeugs eine Symbolik zur Warnung eines hinterher fahrenden Kraftfahrzeugs generiert. Das erfindungsgemäße Kraftfahrzeug ist in Fig. 1 mit Bezugszeichen 1 bezeichnet und die Fahrtrichtung dieses Kraftfahrzeugs ist durch den Pfeil P angedeutet. Im Kraftfahrzeug ist an der Rückseite ein Beleuchtungsmodul 2 sowie eine Umfeldsensorik 4 in der Form einer Kamera verbaut. Das Beleuchtungsmodul wird dabei über eine Steuereinrichtung 3 gesteuert. Das Beleuchtungsmodul, die Steuereinrichtung und die Umfeldsensorik sind lediglich schematisch durch weiße Rechtecke wiedergegeben. Optional kann das Kraftfahrzeug eine weitere nach hinten gerichtete Kamera 6 sowie ein nach hinten gerichtetes Display 7 umfassen. Auch die Kamera und das Display sind nur schematisch durch schraffierte Rechtecke angedeutet, wobei die Kamera und das Display aus Übersichtlichkeitsgründen nur in der Draufsicht D1 dargestellt sind.

In der Draufsicht D1 der Fig. 1 ist ferner eine schematische Detailansicht DT von dem Beleuchtungsmodul 2 gezeigt. Gemäß dieser Detailansicht umfasst das Beleuchtungsmodul eine monochromatische Laserlichtquelle 201 sowie mehrere holographisch-optische Elemente 202, von denen nur eines ersichtlich ist. Die holographisch-optischen Elemente 202 sind dabei beweglich, so dass das Laserlicht auf unterschiedliche holographisch-optische Elemente fallen kann. Die holographisch-optischen Elemente sind ferner transmissiv und das darauf fallende Licht der Laserlichtquelle 201 wird mit dem jeweiligen holographisch-optischen Element phasenmoduliert, so dass eine Symbolik auf dem Boden hinter dem Kraftfahrzeug erzeugt wird. Diese Symbolik ist in den Draufsichten D1 bis D3 jeweils mit Bezugszeichen SY bezeichnet.

In allen Draufsichten D1 bis D3 der Fig. 1 befindet sich das Kraftfahrzeug 1 auf der rechten Fahrspur einer Fahrbahn, wobei die Fahrbahn durch den rechten Fahrbahnrand FR, die Mittellinie ML und den linken Fahrbahnrand FL repräsentiert wird. Ein weiteres Kraftfahrzeug 5 nähert sich von hinten an das Kraftfahrzeug 1 an, wobei der Abstand des Kraftfahrzeugs 5 zum Kraftfahrzeug 1 von der Draufsicht D1 zur Draufsicht D3 immer kleiner wird. Mit dem Beleuchtungsmodul 2 in Kombination mit der Steuereinrichtung 3 und der Umfeldsensorik 4 wird dabei ein Abstandswarnsystem geschaffen, mit dem das Kraftfahrzeug 1 das hintere Kraftfahrzeug 5 auf einen zu geringen Sicherheitsabstand hinweist. Hierzu ist in der Steuereinrichtung 3 ein erster Abstandsschwellwert D und ein zweiter Abstandsschwellwert D' hinterlegt.

In dem Szenario der Draufsicht D1 unterschreitet das Fahrzeug 5 gerade den ersten Abstandsschwellwert D. Dieses Unterschreiten des Abstandsschwellwerts wird über eine Auswertung der Daten der Umfeldsensorik 4 ermittelt. Die Auswertung wird durch die Steuereinrichtung 3 durchgeführt, welche Zugriff auf die Sensordaten der Umfeldsensorik hat. Gemäß der Draufsicht D1 werden nach Unterschreiten des Schwellwerts D vier quer zur Fahrbahn verlaufende Balken B zwischen dem Kraftfahrzeug 1 und dem Kraftfahrzeug 5 als Symbolik SY wiedergegeben. Verringert sich der Abstand zwischen dem Kraftfahrzeug 1 und dem Kraftfahrzeug 5 weiter, werden die Balken B näher aneinandergerückt, d.h. ihre Abstände werden verringert, was in der Draufsicht D2 angedeutet ist. Die Verringerung führt dabei dazu, dass die beiden am nähesten zum Kraftfahrzeug 1 liegenden Balken miteinander verschmelzen. Die Veränderung der Symbolik kann dabei durch die Verwendung eines anderen holographisch-optischen Elements 202 in dem Beleuchtungsmodul 2 erreicht werden. Durch die Verringerung des Abstands der Balken wird der Fahrer des Kraftfahrzeugs 5 intuitiv und gut wahrnehmbar auf die Abnahme des Abstands zum voranfahrenden Kraftfahrzeug 1 hingewiesen.

In der Draufsicht der D3 wird schließlich der zweite Abstandsschwellwert D' zwischen dem Kraftfahrzeug 1 und dem Kraftfahrzeug 5 unterschritten. Da nunmehr eine unmittelbare Kollisionsgefahr zwischen dem Kraftfahrzeug 1 und dem Kraftfahrzeug 5 besteht, wird die Symbolik SY dahingehend geändert, dass ein Warnsymbol W nach Art eines Warndreiecks am Boden zwischen dem Kraftfahrzeug 1 und dem Kraftfahrzeug 5 ausgegeben wird. Hierdurch wird der Fahrer des Kraftfahrzeugs 5 nochmals besonders deutlich auf das Unterschreiten des Sicherheitsabstands D' aufmerksam gemacht. Gegebenenfalls kann bei Unterschreiten des Abstands D' zusätzlich mittels des optionalen Displays 6 eine Warnmeldung ausgegeben werden. Darüber hinaus besteht auch die Möglichkeit, dass mittels der optionalen Kamera 7 ein Bild des Kraftfahrzeugs 5 aufgenommen wird, um hierdurch einen Verkehrsverstoß zu erfassen. Diese Bildinformation kann gegebenenfalls an eine Polizeibehörde übermittelt werden.

In einer Variante der oben beschriebenen Ausführungsform wird bei Verringerung des Abstands zwischen dem Kraftfahrzeug 1 und dem Kraftfahrzeug 5 die Helligkeit der Symbolik SY erhöht. Darüber hinaus kann alternativ oder zusätzlich in der Front des Kraftfahrzeugs ein entsprechendes Beleuchtungsmodul mit Umfeldsensorik und Steuereinrichtung verbaut sein, um hierüber eine Symbolik zwischen dem Kraftfahrzeug 1 und einem voranfahrenden Fahrzeug bei Unterschreiten eines Sicherheitsabstands zu generieren. Die Symbolik, die sich in Fig. 1 hinter dem Kraftfahrzeug 1 befindet, wird vorzugsweise mit einer roten Laserlichtquelle generiert, so dass die Symbolik die gleiche Farbe wie die Rückleuchten des Kraftfahrzeugs hat. Im Unterschied hierzu wird im Falle der Generierung einer Symbolik vor dem Kraftfahrzeug 1 vorzugsweise eine RGB-Laserlichtquelle eingesetzt, so dass die Symbolik in weißer Farbe erscheint und somit der Farbe der Scheinwerfer des Kraftfahrzeugs entspricht.

Die im Vorangegangenen beschriebenen Ausführungsformen der Erfindung weisen eine Reihe von Vorteilen auf. Insbesondere wird auf einfache Weise ein Abstandswarnsystem geschaffen, indem ein Beleuchtungsmodul bei Unterschreiten eines Sicherheitsabstands eine entsprechende Symbolik auf dem Boden zwischen zwei Fahrzeugen generiert. Je nach Veränderung des Abstands kann die Symbolik dabei angepasst werden, um hierdurch die Warnwirkung zu verbessern. Im Besonderen kann ein spezielles Warnsymbol ausgegeben werden, wenn der Abstand zwischen den Kraftfahrzeugen sehr klein wird. In diesem Fall kann ergänzend eine zusätzliche Warnung über ein Display ausgegeben werden oder das sich annähernde Fahrzeug kann zur Erfassung von Verkehrsdelikten fotografiert werden.

### Bezugszeichenliste

- 1: Kraftfahrzeug
- 2: Beleuchtungsmodul
- 201: Laserlichtquelle
- 202: holographisch-optisches Element
- 3: Steuereinrichtung
- 4: Umfeldsensorik
- 5: Kraftfahrzeug
- 6: Display
- 7: Kamera
- SY: Symbolik
- B: Balken
- W: Warnsymbol
- FR: rechter Fahrbahnrand
- FL: linker Fahrbahnrand
- ML: Mittellinie
- P: Fahrtrichtung
- D, D': Abstandsschwellwerte
- D1, D2, D3: Draufsichten
- DT: Detailansicht

## Patentansprüche

1. Kraftfahrzeug mit einem Beleuchtungsmodul (2) zur Generierung einer Symbolik (SY) auf dem Boden im Umfeld des Kraftfahrzeugs (1) und mit einer Umfeldsensorik (4) zur Erfassung von Sensorinformationen in einem Bereich im Umfeld des Kraftfahrzeugs (1), wobei das Kraftfahrzeug (1) ferner eine Steuereinrichtung (3) umfasst, welche dazu eingerichtet ist, das Beleuchtungsmodul (2) in Abhängigkeit von den Sensorinformationen derart zu steuern, dass die Symbolik (SY) automatisch durch das Beleuchtungsmodul (2) in einem Bodenbereich zwischen dem Kraftfahrzeug (1) und einem anderen Verkehrsteilnehmer (5) generiert wird, sobald gemäß den Sensorinformationen der Abstand zwischen dem Kraftfahrzeug (1) und dem anderen Verkehrsteilnehmer (5) eine vorbestimmte Schwelle (D) unterscheitet,
wobei das Beleuchtungsmodul (2) eine kohärente Lichtquelle (201) umfasst, mit deren Licht die Symbolik (SY) auf dem Boden generiert wird, sowie ein oder mehrere holographisch-optische Elemente (202), auf welche das Licht der kohärenten Lichtquelle (201) fällt, wobei das oder die holographisch-optischen Elemente (202) für das Licht der kohärenten Lichtquelle (201) im Wesentlichen nicht-absorbierend sind und wobei das oder die holographisch-optischen Elemente (202) dazu eingerichtet sind, zur Generierung der Symbolik (SY) eine Interferenz des Lichts der kohärenten Lichtquelle (201) durch dessen Phasenmodulation zu bewirken,
**dadurch gekennzeichnet, dass**
die Steuereinrichtung (3) derart ausgestaltet ist, dass sie die Größe der vorbestimmten Schwelle (D) in Abhängigkeit von einem oder mehreren Parametern betreffend das Kraftfahrzeug (1) und/oder die Umgebung des Kraftfahrzugs (1) festlegt, wobei der oder die Parameter einen oder mehrere der folgenden Parameter umfassen:
- die Haftung des Kraftfahrzeugs (1) auf dem Untergrund, wobei die vorbestimmte Schwelle (D) vorzugsweise umso größer festgelegt wird, je geringer die Haftung ist;
- die Sichtweite in der Umgebung des Kraftfahrzeus (1), wobei die vorbestimmte Schwelle (D) vorzugsweise umso größer festgelegt wird, je geringer die Sichtweite ist;
- die Verkehrsdichte in der Umgebung des Kraftfahrzeugs (1), wobei die vorbestimmte Schwelle (D) vorzugsweise umso größer festgelegt wird, je größer die Verkehrsdichte ist;
- eine aktuell geltende Verkehrsvorschrift auf der Strecke, auf der sich das Kraftfahrzeug (1) befindet.

2. Kraftfahrzeug nach Anspruch 1, **dadurch gekennzeichnet, dass** das Beleuchtungsmodul (2) als kohärente Lichtquelle (201) eine Laserlichtquelle, umfasst.

3. Kraftfahrzeug nach einem der vorhergehenden Ansprüche, **dadurch gekennzeichnet, dass** das Beleuchtungsmodul (2) ein scannendes Beleuchtungsmodul ist, welches die Symbolik (SY) mittels einer Scanbewegung eines Lichtspots auf dem Boden generiert.

4. Kraftfahrzeug nach einem der vorhergehenden Ansprüche, **dadurch gekennzeichnet, dass** das Beleuchtungsmodul (2) und die Umfeldsensorik (4) derart im Kraftfahrzeug (1) verbaut sind, dass das Beleuchtungsmodul (2) in den hinteren Bereich des Kraftfahrzeugs (1) abstrahlt und die Umfeldsensorik (4) Sensorinformationen im hinteren Bereich des Kraftfahrzeugs (1) erfasst, wobei der hintere Bereich hinter dem Kraftfahrzeug (1) bezogen auf dessen Längsrichtung liegt, wobei vorzugsweise die Symbolik (SY) nur für solche anderen Verkehrsteilnehmer (5) bei Schwellenunterschreitung deren jeweiligen Abstands zum Kraftfahrzeug (1) generiert wird, welche zumindest teilweise im Raum zwischen den Verlängerungen der beiden Längsseiten des Kraftfahrzeugs (1) nach hinten liegen.

5. Kraftfahrzeug nach einem der vorhergehenden Ansprüche, **dadurch gekennzeichnet, dass** das Beleuchtungsmodul (2) und die Umfeldsensorik (4) derart im Kraftfahrzeug (1) verbaut sind, dass das Beleuchtungsmodul (2) in den vorderen Bereich des Kraftfahrzeugs (1) abstrahlt und die Umfeldsensorik (4) Sensorinformationen im vorderen Bereich des Kraftfahrzeugs (1) erfasst, wobei der vordere Bereich vor dem Kraftfahrzeug (1) bezogen auf dessen Längsrichtung liegt, wobei vorzugsweise die Symbolik (SY) nur für solche anderen Verkehrsteilnehmer (5) bei Schwellenunterschreitung deren jeweiligen Abstands zum Kraftfahrzeug (1) generiert wird, welche zumindest teilweise im Raum zwischen den Verlängerungen der beiden Längsseiten des Kraftfahrzeugs (1) nach vorne liegen.

6. Kraftfahrzeug nach einem der vorhergehenden Ansprüche, **dadurch gekennzeichnet, dass** die Steuereinrichtung (3) zur Steuerung des Beleuchtungsmoduls (2) derart eingerichtet ist, dass im Falle, dass der Abstand zwischen dem Kraftfahrzeug (1) und dem anderen Verkehrsteilnehmer (5) die vorbestimmte Schwelle (D) unterschreitet, die generierte Symbolik (SY), insbesondere die Farbe und/oder Helligkeit und/oder Position und/oder Form der Symbolik (SY), in Abhängigkeit von der Größe dieses Abstands verändert wird.

7. Kraftfahrzeug nach Anspruch 6, **dadurch gekennzeichnet, dass** die Helligkeit der Symbolik (SY) am Boden erhöht wird, je geringer der Abstand zwischen dem Kraftfahrzeug (1) und dem anderen Verkehrsteilnehmer (5) wird.

8. Kraftfahrzeug nach Anspruch 6 oder 7, **dadurch gekennzeichnet, dass** die Symbolik (SY) eine Mehrzahl von Einzelelementen (B) umfasst, wobei sich der Abstand zwischen den Einzelelementen (B) verringert, je geringer der Abstand zwischen dem Kraftfahrzeug (1) und dem anderen Verkehrsteilnehmer (5) wird.

9. Kraftfahrzeug nach Anspruch 8, **dadurch gekennzeichnet, dass** die Einzelelemente (B) mehrere, in Längsrichtung des Kraftfahrzeugs (1) versetzt zueinander angeordnete Balken umfassen, wobei die Balken vorzugsweise gerade Balken und/oder geknickte Balken in der Form von Pfeilspitzen sind, wobei die Pfeilspitzen der geknickten Balken vorzugsweise auf das Kraftahrzeug (1) oder von diesem weg gerichtet sind.

10. Kraftfahrzeug nach einem der vorhergehenden Ansprüche, **dadurch gekennzeichnet, dass** die Steuereinrichtung (3) zur Steuerung des Beleuchtungsmoduls (2) derart eingerichtet ist, dass im Falle, dass der Abstand zwischen dem Kraftfahrzeug (1) und dem anderen Verkehrsteilnehmer (5) einen Grenzwert (D') kleiner als die vorbestimmte Schwelle (D) unterschreitet, eine Warnmeldung (W) als Symbolik ausgegeben wird.

11. Kraftfahrzeug nach einem der vorhergehenden Ansprüche, **dadurch gekennzeichnet, dass** das Kraftfahrzeug (1) ein für den anderen Verkehrsteilnehmer (5) sichtbares Display (6) umfasst, wobei die Steuereinrichtung (3) ferner zur Steuerung des Displays (6) derart eingerichtet ist, dass im Falle, dass der Abstand zwischen dem Kraftfahrzeug (1) und dem anderen Verkehrsteilnehmer (5) eine Grenze kleiner als die vorbestimmte Schwelle (D) unterschreitet, eine Warnmeldung auf dem Display (6) generiert wird.

12. Kraftfahrzeug nach einem der vorhergehenden Ansprüche, **dadurch gekennzeichnet, dass** das Kraftfahrzeug (1) eine Kamera (7) zur Aufnahme des anderen Verkehrsteilnehmers (5) umfasst, wobei die Steuereinrichtung (3) ferner zur Steuerung der Kamera (7) derart eingerichtet ist, dass im Falle, dass der Abstand zwischen dem Kraftfahrzeug (1) und dem anderen Verkehrsteilnehmer (5) einen Schwellwert kleiner als die vorbestimmte Schwelle (D) unterschreitet, die Kamera (7) ein Bild des anderen Verkehrsteilnehmers (5) aufnimmt.

13. Kraftfahrzeug nach einem der vorhergehenden Ansprüche, **dadurch gekennzeichnet, dass** der oder die Parameter zusätzlich einen oder mehrere der folgenden Parameter umfassen:
- die Geschwindigkeit des Kraftfahrzeugs (1), wobei die vorbestimmte Schwelle (D) vorzugsweise umso größer festgelegt wird, je größer die Geschwindigkeit des Kraftfahrzeugs (1) ist;
- die Geschwindigkeit des anderen Verkehrsteilnehmers (5), wobei die vorbestimmte Schwelle (D) vorzugsweise umso größer festgelegt wird, je größer die Geschwindigkeit des anderen Verkehrsteilnehmers (5) ist.

## Claims

1. Motor vehicle comprising a lighting module (2) for generating a symbol system (SY) on the ground in the area surrounding the motor vehicle (1) and comprising a surrounding area sensor system (4) for detecting sensor information in a region in the area surrounding the motor vehicle (1), wherein the motor vehicle (1) further comprises a control device (3) which is designed to control the lighting module (2) depending on the sensor information in such a way that the symbol system (SY) is automatically generated by the lighting module (2) in a ground region between the motor vehicle (1) and another road user (5) as soon as the distance between the motor vehicle (1) and the other road user (5) undershoots a predetermined threshold (D) in accordance with the sensor information,
wherein the lighting module (2) comprises a coherent light source (201), the symbol system (SY) being generated on the ground by the light of said light source, and also one or more holographic-optical elements (202) onto which the light of the coherent light source (201) falls, wherein the holographic-optical element or elements (202) is/are substantially non-absorbent to the light of the coherent light source (201), and wherein the holographic-optical element or elements (202) is/are designed to create interference in the light of the coherent light source (201) by phase modulation thereof in order to generate the symbol system (SY),
**characterized in that**
the control device (3) is configured in such a way that it defines the magnitude of the predetermined threshold (D) depending on one or more parameters relating to the motor vehicle (1) and/or the area surrounding the motor vehicle (1), wherein the parameter or parameters comprises/comprise one or more of the following parameters:
- the grip of the motor vehicle (1) on the ground, wherein the lower the grip, the greater the predetermined threshold (D) is preferably defined to be;
- the range of vision in the area surrounding the motor vehicle (1), wherein the smaller the range of vision, the larger the predetermined threshold (D) is preferably defined to be;
- the volume of traffic in the area surrounding the motor vehicle (1), wherein the greater the volume of traffic, the larger the predetermined threshold (D) is preferably defined to be;
- a currently valid traffic regulation on the stretch of road on which the motor vehicle (1) is located.

2. Motor vehicle according to Claim 1, **characterized in that** the lighting module (2) comprises a laser light source as the coherent light source (201).

3. Motor vehicle according to either of the preceding claims, **characterized in that** the lighting module (2) is a scanning lighting module which generates the symbol system (SY) on the ground by means of a scanning movement of a light spot.

4. Motor vehicle according to one of the preceding claims, **characterized in that** the lighting module (2) and the surrounding area sensor system (4) are installed in the motor vehicle (1) in such a way that the lighting module (2) emits light into the rear region of the motor vehicle (1) and the surrounding area sensor system (4) detects sensor information in the rear region of the motor vehicle (1), wherein the rear region is situated behind the motor vehicle (1) with respect to the longitudinal direction of said motor vehicle, wherein the symbol system (SY) is preferably generated only for those other road users (5) which are at least partially situated to the rear in the space between the extrapolations of the two longitudinal sides of the motor vehicle (1) when the respective distance of said road users from the motor vehicle (1) undershoots a threshold.

5. Motor vehicle according to one of the preceding claims, **characterized in that** the lighting module (2) and the surrounding area sensor system (4) are installed in the motor vehicle (1) in such a way that the lighting module (2) emits light into the front region of the motor vehicle (1) and the surrounding area sensor system (4) detects sensor information in the front region of the motor vehicle (1), wherein the front region is situated in front of the motor vehicle (1) with respect to the longitudinal direction of said motor vehicle, wherein the symbol system (SY) is preferably generated only for those other road users (5) which are at least partially situated to the front in the space between the extrapolations of the two longitudinal sides of the motor vehicle (1) when the respective distance of said road users from the motor vehicle (1) undershoots a threshold.

6. Motor vehicle according to one of the preceding claims, **characterized in that** the control device (3) is designed to control the lighting module (2) in such a way that, in the event of the distance between the motor vehicle (1) and the other road user (5) undershooting the predetermined threshold (D), the generated symbol system (SY), in particular the colour and/or brightness and/or position and/or shape of the symbol system (SY), is changed depending on the size of this distance.

7. Motor vehicle according to Claim 6, **characterized in that** the brightness of the symbol system (SY) on the ground is increased as the distance between the motor vehicle (1) and the other road user (5) becomes smaller.

8. Motor vehicle according to Claim 6 or 7, **characterized in that** the symbol system (SY) comprises a plurality of individual elements (B), wherein the distance between the individual elements (B) is reduced as the distance between the motor vehicle (1) and the other road user (5) becomes smaller.

9. Motor vehicle according to Claim 8, **characterized in that** the individual elements (B) comprise a plurality of bars which are arranged offset in relation to one another in the longitudinal direction of the motor vehicle (1), wherein the bars are preferably straight bars and/or bent bars in the form of arrowheads, wherein the arrowheads of the bent bars are preferably directed toward the motor vehicle (1) or away from said motor vehicle.

10. Motor vehicle according to one of the preceding claims, **characterized in that** the control device (3) is designed to control the lighting module (2) in such a way that, in the event of the distance between the motor vehicle (1) and the other road user (5) undershooting a limit value (D') smaller than the predetermined threshold (D), a warning message (W) is output as the symbol system.

11. Motor vehicle according to one of the preceding claims, **characterized in that** the motor vehicle (1) comprises a display (6) which is visible to the other road user (5), wherein the control device (3) is further designed to control the display (6) in such a way that, in the event of the distance between the motor vehicle (1) and the other road user (5) undershooting a limit smaller than the predetermined threshold (D), a warning message is generated on the display (6).

12. Motor vehicle according to one of the preceding claims, **characterized in that** the motor vehicle (1) comprises a camera (7) for recording the other road user (5), wherein the control device (3) is further designed to control the camera (7) in such a way that, in the event of the distance between the motor vehicle (1) and the other road user (5) undershooting a threshold value smaller than the predetermined threshold (D), the camera (7) records an image of the other road user (5).

13. Motor vehicle according to one of the preceding claims, **characterized in that** the parameter or parameters additionally comprises/comprise one or more of the following parameters:
- the speed of the motor vehicle (1), wherein the greater the speed of the motor vehicle (1), the larger the predetermined threshold (D) is preferably defined to be;
- the speed of the other road user (5), wherein the greater the speed of the other road user (5), the larger the predetermined threshold (D) is preferably defined to be.

## Revendications

1. Véhicule automobile comprenant un module d'éclairage (2) pour générer un symbole (SY) sur le sol dans l'environnement du véhicule automobile (1) et comprenant un système de capteurs d'environnement (4) pour détecter des informations de capteurs dans une zone dans l'environnement du véhicule automobile (1), le véhicule automobile (1) comprenant en outre un dispositif de commande (3) qui est conçu pour commander le module d'éclairage (2) en fonction des informations de capteur de telle sorte que le symbole (SY) soit généré automatiquement par le module d'éclairage (2) dans une zone au sol entre le véhicule automobile (1) et un autre usager de la route (5) dès que, selon les informations de capteur, la distance entre le véhicule automobile (1) et l'autre usager de la route (5) tombe en dessous d'un seuil prédéterminé (D),
le module d'éclairage (2) comprenant une source de lumière cohérente (201) dont la lumière permet de générer le symbole (SY) sur le sol, ainsi qu'un ou plusieurs éléments optiques holographiques (202) sur lesquels tombe la lumière de la source de lumière cohérente (201), l'élément ou les éléments optiques holographiques (202) étant essentiellement non absorbants pour la lumière de la source de lumière cohérente (201) et le ou les éléments optiques holographiques (202) étant, pour générer le symbole (SY) conçus de façon à provoquer une interférence de la lumière de la source de lumière cohérente (201) par sa modulation de phase,
**caractérisé en ce que**
le dispositif de commande (3) est conçu de telle sorte qu'il détermine la grandeur du seuil prédéterminé (D) en fonction d'un ou de plusieurs paramètres concernant le véhicule automobile (1) et/ou l'environnement du véhicule automobile (1), le ou les paramètres comprenant un ou plusieurs des paramètres suivants :
- l'adhérence du véhicule automobile (1) au sol, le seuil prédéterminé (D) étant de préférence fixé à un niveau d'autant plus élevé que l'adhérence est faible ;
- la visibilité dans l'environnement du véhicule automobile (1), le seuil prédéterminé (D) étant de préférence fixé à une valeur d'autant plus élevée que la visibilité est faible ;
- la densité du trafic dans l'environnement du véhicule automobile (1), le seuil prédéterminé (D) étant de préférence fixé à une valeur d'autant plus élevée que la densité du trafic est élevée ;
- une réglementation routière actuellement en vigueur sur le trajet sur lequel se trouve le véhicule automobile (1).

2. Véhicule automobile selon la revendication 1, **caractérisé en ce que** le module d'éclairage (2) comprend une source de lumière laser en tant que source de lumière cohérente (201).

3. Véhicule automobile selon l'une des revendications précédentes, **caractérisé en ce que** le module d'éclairage (2) est un module d'éclairage à balayage qui génère le symbole (SY) au moyen d'un mouvement de balayage d'un spot lumineux sur le sol.

4. Véhicule automobile selon l'une des revendications précédentes, **caractérisé en ce que** le module d'éclairage (2) et le capteur d'environnement (4) sont montés dans le véhicule automobile (1) de telle sorte que le module d'éclairage (2) rayonne dans la zone arrière du véhicule automobile (1) et que le capteur d'environnement (4) détecte des informations de détection dans la zone arrière du véhicule automobile (1), la zone arrière étant située derrière le véhicule automobile (1) par rapport à sa direction longitudinale, le symbole (SY) n'étant de préférence généré que pour les autres usagers de la route (5) dont la distance respective par rapport au véhicule automobile (1) est inférieure au seuil et qui se trouvent au moins partiellement dans l'espace compris entre les prolongements des deux côtés longitudinaux du véhicule automobile (1) vers l'arrière.

5. Véhicule automobile selon l'une des revendications précédentes, **caractérisé en ce que** le module d'éclairage (2) et le système de capteurs d'environnement (4) sont montés dans le véhicule automobile (1) de telle sorte que le module d'éclairage (2) rayonne dans la zone avant du véhicule automobile (1) et que le système de capteurs d'environnement (4) détecte des informations de capteur dans la zone avant du véhicule automobile (1), la zone avant se trouvant devant le véhicule automobile (1) par rapport à sa direction longitudinale, le symbole (SY) n'étant de préférence généré que pour les autres usagers de la route (5) dont la distance respective par rapport au véhicule automobile (1) est inférieure au seuil et qui se trouvent au moins partiellement dans l'espace compris entre les prolongements des deux côtés longitudinaux du véhicule automobile (1) vers l'avant.

6. Véhicule automobile selon l'une des revendications précédentes, **caractérisé en ce que** le dispositif de commande (3) du module d'éclairage (2) est agencé de telle sorte que, dans le cas où la distance entre le véhicule automobile (1) et l'autre usager de la route (5) passe en dessous du seuil prédéterminé (D), le symbole (SY) généré, notamment la couleur et/ou la luminosité et/ou la position et/ou la forme du symbole (SY), est modifiée en fonction de la valeur de cette distance.

7. Véhicule automobile selon la revendication 6, **caractérisé en ce que** la luminosité du symbole (SY) au sol est augmentée au fur et à mesure que la distance entre le véhicule automobile (1) et l'autre usager de la route (5) diminue.

8. Véhicule automobile selon la revendication 6 ou la revendication 7, **caractérisé en ce que** le symbole (SY) comprend une pluralité d'éléments individuels (B), la distance entre les éléments individuels (B) diminuant au fur et à mesure que la distance entre le véhicule automobile (1) et l'autre usager de la route (5) diminue.

9. Véhicule automobile selon la revendication 8, **caractérisé en ce que** les éléments individuels (B) comprennent plusieurs barres agencées de manière décalée les unes par rapport aux autres dans la direction longitudinale du véhicule automobile (1), les barres étant de préférence des barres droites et/ou des barres pliées en forme de pointes de flèche, les pointes de flèche des barres pliées étant de préférence dirigées vers le véhicule automobile (1) ou à l'opposé de celui-ci.

10. Véhicule automobile selon l'une des revendications précédentes, **caractérisé en ce que** le dispositif de commande (3) du module d'éclairage (2) est conçu de telle sorte que, dans le cas où la distance entre le véhicule automobile (1) et l'autre usager de la route (5) est inférieure à une valeur limite (D') inférieure au seuil prédéterminé (D), un message d'avertissement (W) est émis sous forme de symbole.

11. Véhicule automobile selon l'une des revendications précédentes, **caractérisé en ce que** le véhicule automobile (1) comprend un écran (6) visible par l'autre usager de la route (5), le dispositif de commande (3) étant en outre agencé pour commander l'écran (6) de telle sorte que, dans le cas où la distance entre le véhicule automobile (1) et l'autre usager de la route (5) tombe en dessous d'une limite inférieure au seuil prédéterminé (D), un message d'avertissement est généré sur l'écran (6).

12. Véhicule automobile selon l'une des revendications précédentes, **caractérisé en ce que** le véhicule automobile (1) comprend une caméra (7) pour filmer l'autre usager de la route (5), le dispositif de commande (3) étant en outre agencé pour commander la caméra (7) de telle sorte que, dans le cas où la distance entre le véhicule automobile (1) et l'autre usager de la route (5) tombe en dessous d'une valeur seuil inférieure au seuil prédéterminé (D), la caméra (7) enregistre une image de l'autre usager de la route (5).

13. Véhicule automobile selon l'une des revendications précédentes, **caractérisé en ce que** le ou les paramètres comprennent en outre un ou plusieurs des paramètres suivants :
- la vitesse du véhicule automobile (1), le seuil prédéterminé (D) étant de préférence fixé à une valeur d'autant plus élevée que la vitesse du véhicule automobile (1) est élevée ;
- la vitesse de l'autre usager de la route (5), le seuil prédéterminé (D) étant de préférence fixé à une valeur d'autant plus élevée que la vitesse de l'autre usager de la route (5) est élevée.
